Europäisches Patentamt

European Patent Office

Office européen des brevets

(19)

(11) Veröffentlichungsnummer: **0 256 432**
**A2**

(12) **EUROPÄISCHE PATENTANMELDUNG**

(21) Anmeldenummer: **87111315.5**

(22) Anmeldetag: **05.08.87**

(51) Int. Cl.⁴: **C02F 3/08 , B01D 37/00**

(30) Priorität: **12.08.86 DE 3627342**

(43) Veröffentlichungstag der Anmeldung:
**24.02.88 Patentblatt 88/08**

(84) Benannte Vertragsstaaten:
**AT BE CH DE ES FR GB GR IT LI LU NL SE**

(71) Anmelder: **Mecapec S.A.**
**Postfach**
**CH-8716 Schmerikon(CH)**

(72) Erfinder: **Boller, Markus, Dr.**
**Allmeindstrasse 28**
**CH-8104 Wallisellen(CH)**
Erfinder: **Gujer, Willi, Dr.**
**Bahnhofstrasse 22**
**CH-8153 Rümlang(CH)**

(74) Vertreter: **Vièl, Georg, Dipl.-Ing.**
**Am Zimmerplatz 16**
**D-6606 Saarbrücken-Gersweiler(DE)**

(54) **Verfahren zur biologischen Behandlung von Abwasser.**

(57) Die Patentanmeldung befaßt sich mit einem Verfahren zur biologischen Behandlung von Abwasser, wobei in mehreren Stufen die organischen Kohlenstoffverbindungen abgebaut und eine Oxydation der Stickstoffverbindungen erfolgt.

Die Erfindung besteht darin, daß in einer ersten Stufe der Abbau der organischen Kohlenstoffverbindungen erfolgt, danach eine Zwischenklärung vorgenommen wird und vor der als Tauchtropfkörper ausgebildeten stickstoffoxydierenden Stufe eine Filtration vorgesehen ist. In bestimmten Fällen kann die Zwischenklärung entfallen.

Als wesentlicher Vorteil ergibt sich, daß gegenüber bekannten Verfahren erheblich höhere Nitrifikations-Leistungen erreicht werden und damit kleinere, aber leistungsfähigere Tauchtropfkörper-Anlagen verwendet werden können.

Fig. 5

## Verfahren zur biologischen Behandlung von Abwasser

Die Erfindung betrifft ein Verfahren zur biologischen Behandlung von Abwasser, wobei in einer ersten Stufe die organischen Kohlenstoffverbindungen abgebaut werden, danach eine Zwischenklärung vorgenommen wird, und in einer als Tauchtropfkörper ausgebildeten weiteren Stufe eine Nitrifikation durchgeführt wird.

Bei der biologischen Abwasserbehandlung wird in zunehmendem Maß neben der Eliminierung der organischen Kohlenstoffverbindungen auch eine weitgehende Oxydation des Stickstoffs angestrebt.

Die im Vergleich zu den heterotrophen Bakterien wesentlich geringere Wachstumsrate der stickstoff-oxydierenden Bakterien bedingt immer die Gefahr der Auswaschung der letzgenannten Art aus dem System. Darüber hinaus besteht bei gleichzeitiger Anwesenheit von heterotrophen und nitrifizierenden Bakterien eine Konkurrenzsituation um den zur Verfügung stehenden Sauerstoff. Aufgrund dieser Mechanismen sind die erzielten Stoffumsatzraten bei der Stickstoff-Oxydation limitiert.

Die Zielsetzung von Kohlenstoffabbau und Nitrifikation wird bekanntermaßen mit ein-und mehrstufigen biologischen Systemen erzielt. Bei mehrstufigen Verfahren (z.B. Kombination Belebungsverfahren /Tauchtropfkörper gemäß DE 31 17 805 A1), werden die Feststoffe des Schlamm-Abwasser-Gemisches aus dem Ablauf der ersten Stufe durch Sedimentation (Zwischenklärbecken) abgeschieden. Je nach hydraulischer Auslegung der Sedimentationsstufe und Absetzeigenschaften des Schlammes können ca. 20 bis 50 mg/l Feststoffe, zum Teil deutlich mehr, in dem Abwasser, das der nachfolgenden Stufe zugeleitet wird, verbleiben. Diese abtreibenden Feststoffe bestehen überwiegend aus Biomasse der ersten Stufe und können somit wieder zu der oben beschriebenen Konkurrenzsituation zwischen heterotrophen Bakterien und stickstoffoxydierenden Arten mit der Konsequenz geringer Stickstoff-Oxydationsraten führen.

Der Erfindung liegt die Aufgabe zugrunde, bei einem Verfahren gemäß der im Oberbegriff des Anspruchs 1 angegebenen Art, die Leistung der nitrifizierenden Stufe zu erhöhen.

Diese Aufgabe wird erfindungsgemäß dadurch gelöst, daß vor der Nitrifikation eine Filtration des Abwassers vorgesehen wird.

Nach einer weiteren Ausbildung der Erfindung ist vorgesehen, daß der Filtration ein Festbettreaktor vorgeschaltet wird.

Die mit der Erfindung erzielten Vorteile bestehen darin, daß gegenüber bekannten Verfahren erheblich höhere Nitrifikationsleistungen erreicht werden und damit kleinere, aber leistungsfähigere Tauchtropfkörper-Anlagen verwendet werden können.

Die Erfindung wird anhand der Zeichnungen näher erläutert.

Es zeigt schematisch

Fig. 1 die Kombination Belebungsverfahren, Zwischenklärbecken, Filtration und nitrifizierender Tauchtropfkörper,

Fig. 2 die Kombination Festbettreaktor, Zwischenklärbecken, Filtration und nitrifizierender Tauchtropfkörper,

Fig. 3 die Kombination Belebungsverfahren, Zwischenklärung, Festbettreaktor, Filtration und nitrifizierender Tauchtropfkörper,

Fig. 4 die Kombination Festbettreaktor, Zwischenklärung, Festbettreaktor, Filtration und nitrifizierender Tauchtropfkörper und

Fig. 5 veranschaulicht den Vorteil des neuen Verfahrens gegenüber dem Stand der Technik.

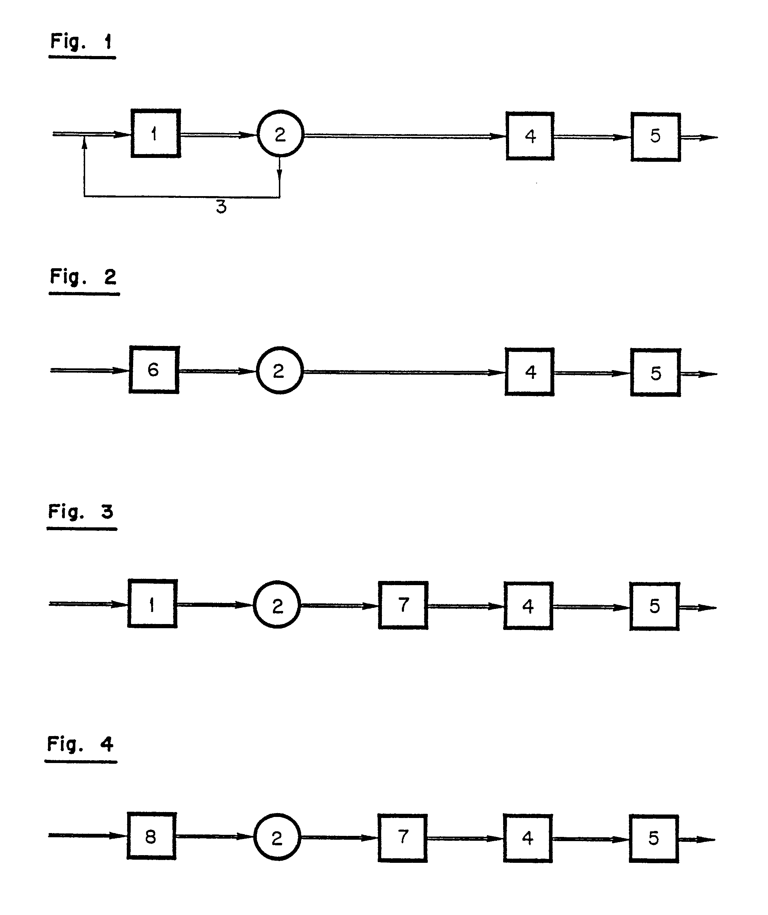

Das Verfahren nach der Erfindung, so auch die Ausführungsbeispiele gemäß den Fig.1 bis 4, hat grundsätzlich

-eine erste biologische Stufe für den Abbau der organischen Kohlenstoffverbindungen,

-eine Filtrationsstufe und

-einen Tauchtropfkörper als Nitrifikationsstufe.

Das Fließschema nach Fig. 1 zeigt als erste Stufe ein Belebungsverfahren 1 mit folgender Zwischenklärung 2 sowie Schlammrückführung 3. Die Belebungsstufe 1 ist für weitgehende BSB5-Eliminierung ausgelegt. Der Ablauf der Zwischenklärung 2 wird über eine Filtrationsstufe 4 geleitet. Der von Feststoffen und organischen Kohlenstoffverbindungen weitgehend befreite Abwasserstrom wird dann abschließend dem nitrifizierenden Tauchtropfkörper 5 zugefuhrt.

Die Filtrationsstufe kann dabei in der Art einer an sich bekannten Überstau-Filtration, einer Trocken-Filtration oder beispielsweise einer Tuch-Filtration ausgeführt sein.

Die hier beschriebene Verfahrenstechnik weist gravierende Vorteile auf, die den bisher praktizierten Verfahren der Abwasserbehandlung nicht eigen sind.

Durch den weitestgehenden Rückhalt suspendierter Stoffe in der Filtrationsstufe 4 können die Besiedlungsflächen des Tauchtropfkörpers 5 nahezu ausschließlich von den nitrifizierenden Bakterien genutzt werden. Da die gelösten organischen Abwasserinhaltsstoffe bereits in der ersten biologischen Stufe 1 weitgehend eliminiert sind, ist kaum noch ein Zuwachs heterotropher Bakterien in der zweiten biologischen Stufe zu erwarten.

Somit stehen nicht nur die Bewuchsflächen des Tauchtropfkörpers 5 ausschließlich den nitrifizierenden Bakterien zur Verfügung, sondern es wird gleichzeitig auch eine Konkurrenzsituation um das Sauerstoffangebot vermieden. Die Folge sind erheblich höhere Nitrifikationsleistungen und somit kleinere, aber leistungsfähigere Tauchtropfkörper-Anlagen.

Da der Zellertrag der nitrifizierenden Bakterien nur sehr gering ist, kann auf eine Feststoffabtrennung nach der Nitrifikationsstufe 5 verzichtet werden. Die Suspensakonzentration im Ablauf dieser Stufe 5 ist sehr gering (bei häuslichem Abwasser ca.1 bis 3 mg/l höher als nach der Filtrationsstufe) und deutlich geringer als nach einer konventionellen Sedimentationsstufe.

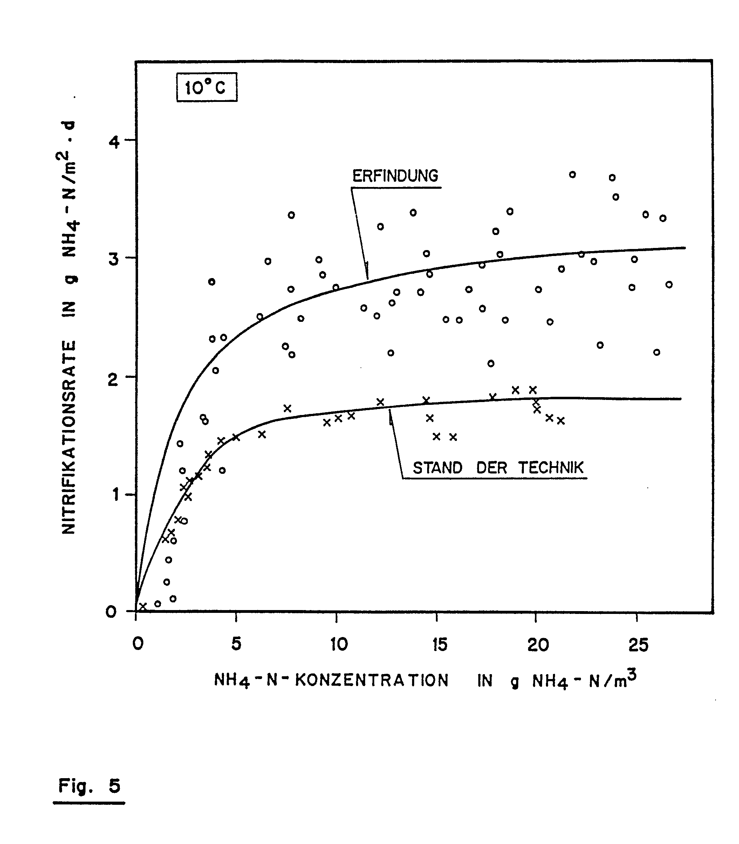

Den Vorteil des Verfahrens veranschaulicht deutlich Fig. 5, worin die Nitrifikationsrate über der Ammonium-Stickstoff-Konzentration aufgetragen ist: Die untere Kurve wurde aufgenommen bei einem Verfahren ohne Filtrationsstufe 4 vor dem Tauchtropfkörper 5, während die obere Kurve das Ergebnis bei Anwendung des erfindungsgemäßen Verfahrens darstellt. Es ist ersichtlich, daß die Nitrifikationsrate bei dem Verfahren nach der Erfindung deutlich über den von geläufigen Verfahren her bekannten Werten liegt.

Das Verfahren nach Fig. 2 unterscheidet sich zum vorgenannten lediglich dadurch, daß in der ersten Stufe statt dem Belebungsverfahren 1 ein Festbettreaktor 6 installiert ist. Eine Schlammrückführung 3 erübrigt sich damit.

Beim Verfahren gemäß Fig. 3 ist die Belebungsanlage 1 relativ hoch belastet. Zur Eliminierung verbliebener gelöster organischer Kohlenstoffverbindungen werden diese vor der Filtrationsstufe 4 in einem Festbettreaktor 7 weitgehend oxydiert. Der filtrierte Abwasserstrom wird dann dem nitrifizierenden Tauchtropfkörper 5 zugeführt.

Bei dem Verfahren nach Fig. 4 wird als hochbelastete erste Stufe ein Festbettverfahren 8 vorgesehen. Im übrigen entspricht das Verfahren demjenigen nach Fig. 3.

## Ansprüche

1. Verfahren zur biologischen Behandlung von Abwasser, wobei in einer ersten Stufe die organischen Kohlenstoffverbindungen abgebaut werden, danach eine Zwischenklärung vorgenommen wird, und in einer als Tauchtropfkörper ausgebildeten weiteren Stufe eine Nitrifikation durchgeführt wird, dadurch **gekennzeichnet**, daß vor der Nitrifikation eine Filtration des Abwassers vorgesehen wird.

2. Verfahren nach Anspruch 1, dadurch **gekennzeichnet**, daß der Filtration ein Festbettreaktor vorgeschaltet wird.

Fig. 1

Fig. 2

Fig. 3

Fig. 4

Fig. 5